# EUROPÄISCHE PATENTSCHRIFT

(11) **EP 4 130 446 B1**
(45) Veröffentlichungstag und Bekanntmachung des Hinweises auf die Patenterteilung: **14.08.2024**
(21) Anmeldenummer: 22181541.8
(22) Anmeldetag: 28.06.2022
(51) Int. Cl.: F01N 3/20, F01N 3/28, B01F 23/213, B01F 25/433, B01F 35/90, B01F 35/92

(54) **MISCHVORRICHTUNG**
MIXING DEVICE
DISPOSITIF DE MÉLANGE

(30) Priorität: 05.08.2021 DE 102021120423
(43) Veröffentlichungstag der Anmeldung: 08.02.2023
(73) Patentinhaber: Friedrich Boysen GmbH & Co. KG, 72213 Altensteig (DE)
(72) Erfinder: SAILER, Dennis, Altensteig (DE)
(74) Vertreter: Manitz Finsterwald Patent- und Rechtsanwaltspartnerschaft mbB

(56) Entgegenhaltungen:
- EP-A1- 2 090 761
- EP-A1- 3 406 873
- EP-B1- 2 268 904
- WO-A1-2006/003868
- WO-A1-2017/198292
- US-A1- 2019 112 962
- US-B2- 10 337 381

## Beschreibung

Die vorliegende Erfindung betrifft eine Mischvorrichtung zum Einbringen und Verteilen eines flüssigen Zusatzstoffes in einen Gasstrom, insbesondere für eine Abgasanlage einer Brennkraftmaschine.

Das Problem, eine Flüssigkeit in geeigneter Form zuverlässig in einen Gasstrom einzubringen und zu verteilen, um beispielsweise eine chemische Reaktion von Komponenten des Gasstroms mit Komponenten des Zusatzstoffes zu ermöglichen, stellt sich in vielen Anwendungsbereichen. In der Abgastechnik sieht man sich diesem Problem beispielsweise in Zusammenhang mit dem SCR-Verfahren ("selektive katalytische Reduktion") konfrontiert, bei dem eine wässrige Harnstofflösung in den Abgasstrang eines Kraftfahrzeugs eingebracht wird, zum Beispiel mittels einer Dosierpumpe und eines Injektors. Durch Thermolyse und Hydrolyse entstehen aus der Harnstofflösung Ammoniak und CO₂. Das so erzeugte Ammoniak kann in einem geeigneten Katalysator mit dem in dem Abgas enthaltenen Stickoxiden reagieren, die so effizient aus dem Abgas entfernt werden. Das genannte Verfahren gewinnt gerade vor dem Hintergrund sich ständig verschärfender Schadstoffgrenzwerte zunehmend an Bedeutung.

Bei dem SCR-Verfahren ist es von besonderer Relevanz, dass die Harnstofflösung in einem geeigneten Verhältnis zu der im Abgas enthaltenen Stickoxidmenge zugeführt wird. Außerdem ist es von großer Bedeutung, dass die in den Abgasstrom eingebrachte Harnstofflösung möglichst vollständig verdampft und in dem Abgasstrom gleichmäßig verteilt wird. Wichtig ist auch, dass die an der Abgasreinigung beteiligten Komponenten möglichst schnell eine geeignete Betriebstemperatur erreichen, da erst dann eine effizienten Abgasreinigung einsetzt.

Bei bekannten SCR-Mischstrecken, bei denen der Wärmeeintrag im Wesentlichen durch das Abgas selbst erfolgt, können sich an den Wänden der Mischstrecke Filme des eingebrachten Zusatzstoffes bilden, die letztlich zur Bildung von störenden Ablagerungen führen. Sie entstehen nicht selten im Bereich von Umlenkungen vor dem eigentlichen SCR-Katalysator.

In der Abgasnachbehandlung wird zunehmend auch auf den Einsatz von aktiven Heizkatalysatoren gesetzt, welche mittels einer Widerstandheizung beheizt werden. Die genannten Katalysatoren werden also nicht rein passiv durch das heiße Abgas sondern auch aktiv beheizt. Durch den zusätzlichen Enthalpieeintrag wird eine verstärkte Konvertierung der Schadstoffe und/oder der eindosierten Zusatzstoffe erreicht. Ein mit derartigen Katalysatoren einhergehender Nachteil sind allerdings höhere Gegendrücke und andere nachteilige Strömungseinflüsse. Bei einer ungünstiger Massenverteilung des eingesprühten Zusatzstoffes (z.B. ein Reduktionsmittel) auf einen Katalysator können auf Grund der hohen Anzahl von Kanten vermehrt Ablagerungen entstehen, die u.a. den Gegendruck zusätzlich erhöhen. Diese Ablagerungen senken somit die Effizienz des Katalysators.

Letztlich unterliegen die vorstehend beschriebenen Konzepte einem thermodynamischen Zielkonflikt. Einerseits ist ein hoher Wärmeeintrag für die rasche Verdampfung des Reduktionsmittels (z.B. wässrige Harnstofflösung) und dessen Vermischung mit dem Abgas gewünscht, andererseits kann ein zu großer Wärmeeintrag bei ungünstigen Verhältnissen auch lokal zur Bildung von Ablagerungen führen. Sobald der Wärmeeintrag sehr hoch ist, kann in dem Film eine lokal verstärkte Wasserverdunstung und -verdampfung stattfinden, was neben einer unerwünschten lokalen Erhöhung der Isocyansäurekonzentration auch zur Bildung Ablagerungsprodukten führt. Derartige Ablagerungen in der Mischerstrecke sind besonders nachteilig, da sie die Vermischung des Zusatzstoffes weiter verschlechtern und sogar zu Sekundärmissionen führen können. Außerdem steigt der mit der Mischvorrichtung verbundene Gegendruck, was letztlich zu einer Erhöhung des Kraftstoffverbrauchs führt. Ein weiterer negativer Aspekt sind Bauteilschädigungen durch Korrosion.

Im besonderen Maße problematisch sind die vorstehend beschriebenen Effekte bei transienten Zyklen aus einem Kaltstart. Die Oberflächentemperaturen der Komponenten der Mischvorrichtung sind dann im Regelfall zu niedrig, um eine zufriedenstellende Umsetzung des Zusatzstoffes zu erzielen. Bei einem SCR-System bedeutet dies, dass die eingebrachte Harnstofflösung aufgrund der herrschenden, vergleichsweise niedrigen Temperaturen nicht hinreichend gut verdampft wird und folglich auch zu wenig Ammoniak zur Verfügung steht, um eine vollständige Umsetzung des im Abgas enthaltenen NOₓ sicherzustellen. Außerdem findet die selektive katalytische Reduktion des NOₓ in dem SCR-Katalysator aufgrund der zu niedrigen Temperaturen in einem suboptimalen Bereich statt.

Vergleichbare Probleme finden sich auch in anderen Bereichen der Abgastechnik oder sogar in ganz anderen Anwendungsbereichen.

Die EP 2 090 761 A1, US 2019/112962 A1 und EP 3 406 873 A1 zeigen gattungsfremde Mischvorrichtungen. Die WO 2006/003868 A1, EP 2 268 904 B1 und US 10,337,381 B2 zeigen Mischvorrichtungen mit den Merkmalen des Oberbegriffs des Anspruchs 1.

Es ist daher eine Aufgabe der vorliegenden Erfindung, einen effizienteren Weg zu finden, einen flüssigen Zusatzstoff in einen Gasstrom einzubringen und ihn darin zu verteilen. Hierfür soll eine geeignete Mischvorrichtung bereitgestellt werden, die konstruktiv einfach aufgebaut ist und effizient funktioniert.

Die Lösung dieser Aufgabe erfolgt mit einer Mischvorrichtung mit den Merkmalen des Anspruchs 1.

Erfindungsgemäß weist die Mischvorrichtung einen Gasführungsabschnitt zur Führung des Gasstroms auf. Ferner ist eine Eindosiereinrichtung zum Einbringen des Zusatzstoffes in einen Eindosierbereich des Gasführungsabschnitts vorgesehen. Eine Heizeinrichtung dient zur aktiven Beheizung zumindest eines Heizabschnitts des Gasführungsabschnitts. Der Heizabschnitt ist in dem Eindosierbereich oder stromabwärts des Eindosierungsbereichs angeordnet. Ferner weist der Gasführungsabschnitt in dem Heizabschnitt zumindest eine radial in den Gasstrom ragende Erhebung zur Beeinflussung der Strömung des Gasstroms auf.

Erfindungsgemäß wurde erkannt, dass durch eine Kombination eines aktiven Heizens eines Teils des Gasführungsabschnitts in dem Eindosierbereich und/oder stromabwärts davon mit einer bewussten Beeinflussung des Gasstroms durch die radial nach innen ragende Erhebung in dem beheizten Abschnitt eine verbesserte Verdampfung und Vermischung des eingebrachten Zusatzstoffes erzielt wird. Außerdem können die geforderten Ablagerungsgrenzdosierraten eingehalten werden. Die Ablagerungsgrenzdosierrate ist diejenige Eindosierrate (also die Menge von eingebrachtem Zusatzstoff pro Zeiteinheit), oberhalb derer bei einem bestimmten Betriebspunkt die Bildung von Ablagerungen einsetzt. Zwar zielt die Erfindung im Wesentlichen auf den Einsatz von Harnstoff-Wasser-Lösungen als Reduktionsmittel im Rahmen eines SCR-Systems ab. Das erfindungsgemäße Konzept ist jedoch auch in vielen anderen Bereichen anwendbar, beispielsweise bei dem Einbringen von Kraftstoff in ein Abgassystem im Rahmen eines HCl-Systems.

Letztlich wird durch die zumindest eine Erhebung die Kontaktzeit des eingebrachten Fluids an entsprechenden Bereichen der Wandung des Gasführungsabschnitts erhöht und gleichzeitig ein Wärmestrom in gerade diesem Bereich eingebracht. Dies hat eine Erhöhung des Verdampfungsgrads des Zusatzstoffes zur Folge. Die beiden Aspekte wirken synergetisch zusammen, so dass eine wesentlich verbesserte Einbringung des Zusatzstoffs erzielt wird und gleichzeitig die Bildung von Ablagerung deutlich reduziert wird.

Weitere Ausführungsformen der Erfindung sind in den Ansprüchen, der Beschreibung und den beigefügten Zeichnungen angegeben.

Erfindungsgemäß erstreckt sich die Erhebung in Umfangsrichtung des Gasführungsabschnitts. Die Erhebung kann sich über einen Teil des Umfangs erstrecken oder in Umfangsrichtung geschlossen sein. Erfindungsgemäß sind zumindest zwei Erhebungen vorgesehen, die in Strömungsrichtung des Gasstroms hintereinander angeordnet sind, um die vorstehend erwähnte Kontaktzeit zu erhöhen.

Die Erhebung kann sich auch in einer axialen Richtung des Gasführungsabschnitts erstrecken. Insbesondere sind zumindest zwei Erhebungen vorgesehen, die in Umfangsrichtung des Heizabschnitts verteilt angeordnet sind. Bevorzugt erstrecken sich diese Erhebungen im Wesentlichen parallel zueinander.

In vielen Fällen ist eine Erstreckung der Erhebung(en) in einer Richtung senkrecht bzw. parallel zu der Gasströmungsrichtung und/oder zur Längsachse des Gasführungsabschnitt von Vorteil. Es sind jedoch auch Anwendungsfälle denkbar, in denen die zumindest eine Erhebung schräg verläuft.

Grundsätzlich ist es auch möglich, sich axial erstreckende Erhebungen und sich in Umfangsrichtung erstreckende Erhebungen zu kombinieren, um den gewünschten Effekt zu erzielen.

Gerade bei sich in Umfangsrichtung erstreckenden Erhebungen kann eine stromaufwärtige Flanke der Erhebung und/oder eine stromabwärtige Flanke der Erhebung in Strömungsrichtung des Gases zumindest abschnittsweise eben ausgebildet sein. Zur Erzeugung des gewünschten Strömungsmusters im wandnahen Bereich und/oder zur geeigneten Beeinflussung des sich gegebenenfalls an der Wandung des Gehäuseführungsabschnitts bildenden Zusatzstofffilms können die genannten Flanken auch abschnittsweise gekrümmt sein. Die Flanken können jeweils Abschnitte mit unterschiedlichen Steigungen oder unterschiedlichen Krümmungen aufweisen. Eine Kombination von ebenen und gekrümmten Abschnitten ist ebenfalls möglich. Bei sich in axialer Richtung erstreckenden Erhebungen beziehen sich die Begriffe "stromaufwärtig" und "stromabwärtig" auf eventuell vorhandene Drallkomponenten des Abgasstroms, also Strömungskomponenten, die in Umfangsrichtung des Gasführungsabschnitts strömen.

Die stromaufwärtige Flanke der Erhebung und die stromabwärtige Flanke der Erhebung können über einen gekrümmten Abschnitt ineinander übergehen, um Strömungsabrisse zu verhindern.

Die zumindest eine Erhebung ist erfindungsgemäß durch einen Umformprozess des Gasführungsabschnitts erzeugt. In vielen Fällen wird der Gasführungsabschnitt durch ein Blechteil gebildet, wobei die Form des Querschnitts des Gasführungsabschnitts grundsätzlich - d.h. unabhängig von dessen Bauart - bedarfsgerecht gewählt ist (beispielsweise kreisrund, oval oder polygonal). In ein derartiges Blechteil lässt sich auf einfache Weise eine Sicke einbringen, die dann eine in den Gasstrom ragende Erhebung bildet.

Alternativ ist es erfindungsgemäß möglich, die Erhebung durch eine lokale Verdickung der Wandung des Gasführungsabschnitts zu bilden. Durch eine bewusste Variation der Wanddicke können auch die thermischen Eigenschaften der Mischvorrichtung lokal angepasst werden, da unterschiedlich dicke Wandbereiche unterschiedliche Wärmeeintrags- bzw. -austrags- und/oder Wärmespeichereigenschaften aufweisen.

Es ist auch möglich, Bereiche mit variierenden Wanddicken und umgeformte Bereiche zu kombinieren, um den Heizabschnitt mit geeigneten Erhebungen zu versehen, die in Zusammenspiel mit einer entsprechend dimensionierten und ausgelegten Heizeinrichtung die geforderte ablagerungsreduzierte Einbringung des Zusatzstoffes ermöglicht.

Der Gasführungsabschnitt kann in dem Heizabschnitt zumindest einen ersten und einen zweiten erhebungsfreien Abschnitt aufweisen, zwischen denen die Erhebung angeordnet ist, insbesondere wobei der zweite erhebungsfreie Abschnitt eine kleinere Querschnittsfläche aufweist, als der erste erhebungsfreie Abschnitt. Beispielsweise ist der Querschnitt des Gasführungsabschnitts vor der Erhebung größer als hinter der Erhebung.

Zur verbesserten Vermischung des Zusatzstoffes kann stromaufwärts und/oder stromabwärts der Eindosiereinrichtung zumindest ein statischer Mischer angeordnet sein. Beispielsweise ist dieser Mischer derart angeordnet und ausgestaltet, dass er zumindest einem Teil des Gasstroms eine Drallkomponente aufprägt.

Gemäß einer Ausführungsform der Mischvorrichtung umfasst der Gasführungsabschnitt eine Mischkammer mit einem ersten Endbereich, der einen Gaseinlass des Gasführungsabschnitts aufweist. Ferner ist ein dem ersten Endbereich gegenüberliegender zweiter Endbereich vorgesehen, der den Eindosierbereich umfasst. Der Gasführungsabschnitt umfasst ferner ein Tauchrohr, das einen Gasauslass des Gasführungsabschnitts bildet und das von dem ersten Endbereich in die Mischkammer ragt. Insbesondere sind eine Längsachse der Mischkammer und eine Längsachse des Tauchrohrs parallel, bevorzugt koaxial angeordnet. Ein in die Mischvorrichtung einströmender Gasstrom tritt somit in den ersten Endbereich des Gasführungsabschnitts ein, nämlich in die Mischkammer und strömt zu dem gegenüberliegenden Endbereich, in dem der Eindosierbereich angeordnet ist. Der mit dem Zusatzstoff beaufschlagte Gasstrom tritt anschließend durch das Tauchrohr, das von dem ersten Endabschnitt aus in die Mischkammer ragt, aus dem Gasführungsabschnitt aus. Eine solche Konstruktion ermöglicht eine besonders effiziente Einbringung des Zusatzstoffes bei gleichzeitig kompakter Bauweise der Mischvorrichtung.

Zur Verhinderung von Ablagerung und zur Erhöhung der Verdampfungsleistung kann die Heizeinrichtung an dem Tauchrohr angeordnet sein. Es ist auch möglich, die Heizeinrichtung an dem zweiten Endbereich anzuordnen, also in dem Bereich, der auch den Eindosierbereich mit der Eindosiereinrichtung aufweist.

Grundsätzlich ist es auch möglich, sowohl an dem Tauchrohr als auch in dem zweiten Endbereich eine Heizeinrichtung vorzusehen. In diesem Fall sind dann zwei Heizabschnitte vorgesehen, nämlich einer im Eindosierbereich und einer stromabwärts des Eindosierbereichs (am Tauchrohr). Im Bereich der beiden Heizabschnitte, bevorzugt in beiden Heizabschnitten, ist zumindest eine Erhebung angeordnet.

Der Gaseinlass kann derart ausgestaltet und angeordnet sein, dass der Gasstrom in einer Richtung quer, insbesondere senkrecht und seitlich versetzt zu einer Längsachse der Mischkammer in die Mischkammer einbringbar ist. Durch das Einbringen des Gasstroms in die Mischkammer quer und seitlich versetzt zu deren Längsachse, wird der Gasstrom mit einer Drallkomponente beaufschlagt, die unter anderem von der Geometrie des Tauchrohrs und einer Innenwand der Mischkammer sowie von der Anordnung und der Ausgestaltung der Einlassöffnung abhängt. Durch eine Variation der genannten Geometrien können die Gasströmung im Inneren der Mischkammer und damit die Charakteristik der Mischvorrichtung an die jeweils vorliegenden Anforderungen angepasst werden.

Insbesondere ist zwischen der Mischkammer und dem Tauchrohr ein radialer Spalt vorgesehen, durch den Abgas aus dem ersten Endbereich zu dem zweiten Endbereich strömt. In dem radialen Spalt kann eine Strömungsleiteinrichtung angeordnet sein. Die Strömungsleiteinrichtung kann entweder zur Erzeugung eines Dralls in dem Gasstrom dienen, beispielsweise wenn dieser nicht durch die Ausgestaltung und Anordnung des Gaseinlasses erzeugt wird. Es ist aber auch möglich, dass die Strömungsleiteinrichtung zur "Gleichrichtung" der Gasströmung dient, falls dies im jeweiligen Anwendungsfall vorteilhaft ist.

Die vorliegende Erfindung betrifft ferner eine Abgasreinigungseinrichtung zur Reinigung eines Abgases mit einer Mischvorrichtung gemäß einer der vorstehend beschriebenen Ausführungsformen.

Gemäß einer Ausführungsform der Abgasreinigungseinrichtung ist die Mischvorrichtung stromaufwärts zumindest einer SCR-Katalysatoreinheit angeordnet. Stromaufwärts der Mischvorrichtung können zusätzlich zumindest eine Partikelfilter- und/oder eine Oxidationskatalysatoreinheit angeordnet sein.

Die Mischvorrichtung kann in einer Kammer angeordnet sein, die mit der SCR-Katalysatoreinheit in Strömungsverbindung steht, insbesondere mit einem auslassseitigen Ende der der SCR-Katalysatoreinheit, so dass die Mischvorrichtung zumindest abschnittsweise mit zumindest einem Teil des aus der SCR-Katalysatoreinheit austretenden Abgasstroms beaufschlagbar ist. Bevorzugt ist die SCR-Katalysatoreinheit in der Kammer angeordnet. Bei dieser Bauart wird die Wärme des Abgases zusätzlich genutzt, um die Mischvorrichtung und/oder die SCR-Katalysatoreinheit zumindest abschnittsweise auch von außen aufzuwärmen und damit schneller auf eine geeignete Betriebstemperatur zu bringen.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine herkömmliche Mischvorrichtung mit einer aktiven Heizeinrichtung,
- Fig. 2: eine erste Ausführungsform der erfindungsgemäßen Mischvorrichtung,
- Fig. 3: eine zweite Ausführungsform der erfindungsgemäßen Mischvorrichtung,
- Fig. 4: Beispiel einer Mischvorrichtung,
- Fig. 5: weiteres Beispiel einer Mischvorrichtung,
- Fig. 6: eine dritte Ausführungsform der erfindungsgemäßen Mischvorrichtung,
- Fig. 7: eine vierte Ausführungsform der erfindungsgemäßen Mischvorrichtung,
- Fig. 8: eine fünfte Ausführungsform der erfindungsgemäßen Mischvorrichtung und
- Fig. 9: eine sechste Ausführungsform der erfindungsgemäßen Mischvorrichtung.

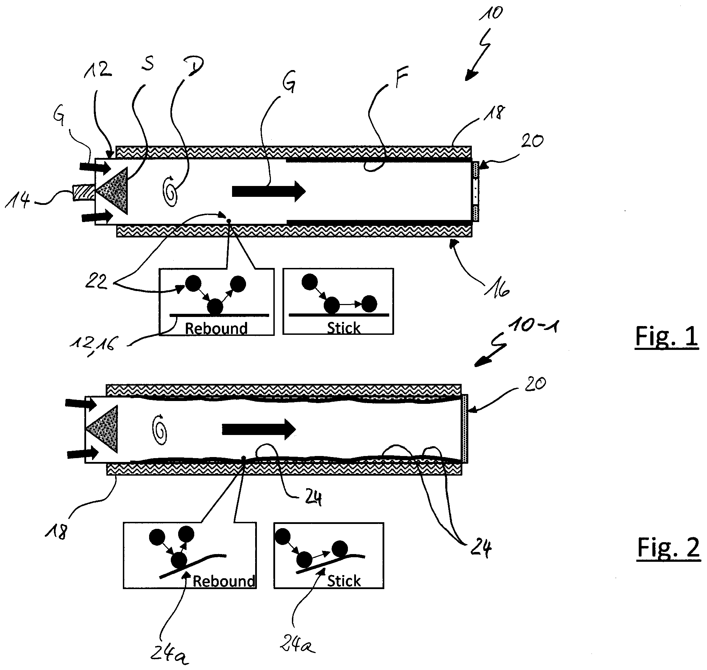

Fig. 1 zeigt eine herkömmliche Mischvorrichtung 10 mit einem Gasführungsabschnitt 12, der im Wesentlichen als glattes Rohr ausgeführt ist. Auf der linken Seite des Gasführungsabschnitt 12 ist dieser mit einer Abgasanlage einer Brennkraftmaschine verbunden. Abgas G tritt auf dieser Seite in den Gasführungsabschnitt 12 ein, was durch zwei schwarze Pfeile gekennzeichnet ist. Hier ist auch ein Injektor 14 angeordnet, durch den eine wässrige Harnstofflösung in den Abgasstrom G eingebracht wird. Ein entsprechender Sprühkegel S ist schematisch eingezeichnet. Stromaufwärts des Injektors 14 und/oder im Gasführungsabschnitt 12 selbst ist ein nicht gezeigter Drallerzeuger angeordnet, durch den der Gasstrom G mit einer Drallkomponente beaufschlagt wurde, um den Harnstoff besser in dem Gasstrom G verteilen zu können. Die Drallkomponente ist schematisch durch einen Wirbel D dargestellt.

Ein Abschnitt 16 des Gasführungsabschnitts ist mit einer Heizeinrichtung 18 versehen. Die Heizeinrichtung 18 gestattet die aktive Beheizung des Abschnitts 16 (auch als Heizabschnitt bezeichnet), um das Verdampfen des eingebrachten Harnstoffs zu unterstützen.

Üblicherweise wird der Harnstoff pulsweitenmoduliert in den Gasstrom G eingebracht. Das heißt, die Eindosierung erfolgt intermittierend. Gerade nach einem Kaltstart sind das Abgas und die Mischvorrichtung kalt. Dies hat zur Folge, dass der eingebrachte Harnstoff nicht vollständig verdampft wird, sondern einen Film an der Innenwand des Gasführungsabschnitts 12 bildet. Zwar beschleunigt die Heizeinrichtung 18 das Erreichen des Betriebspunkts, die Bildung eines Films lässt sich jedoch in vielen Fällen nicht wirksam vermeiden.

In Fig. 1 ist gezeigt, dass der während dem Eindosiervorgang erzeugte Film während der Schließzeit des Injektors 14 gewandert ist. Er wird durch die Abgasströmung G zu dem ausgangsseitigen Ende des Gasführungsabschnitts 12 transportiert. Dies hat zur Folge, dass am stromabwärtigen Ende der Mischvorrichtung 10 eine unvollkommene Durchmischung erzeugt wird. In wandnahen Bereichen ist die Konzentration des Harnstoffs größer als im zentralen Bereich, was durch ein Harnstoffprofil 20 schematisch angedeutet ist.

Welche Prozesse auftreten, wenn ein Harnstofftröpfchen 22 an die Innenwand des Gasführungsabschnitts 12 prallt, ist in Fig. 1 ebenfalls schematisch gezeigt. Einerseits tritt ein sogenannter "Rebound"-Effekt auf. Das Harnstofftröpfchen 22 stößt in einem Winkel gegen die Innenwand des Abschnitts 12 und prallt an diesem ab, wobei es auch aufgrund der Gasströmung G in Strömungsrichtung mitgerissen wird. Unter Umständen zerplatzt das Tröpfchen 22 in sekundäre Tröpfchen, die ebenfalls von der Gasströmung G mitgerissen werden. In manchen Fällen tritt bei der Kollision des Tröpfchens 22 mit der Innenwand des Abschnitts 12 jedoch auch der sogenannte "Stick"-Effekt auf. Das Tröpfchen 22 verbleibt nach dem Aufprall auf der Wand und bildet zusammen mit anderen Tröpfchen 22 einen Film F, der durch die Wirkung des Gasstroms G wandert (in Fig. 1 von links nach rechts).

Bei ausreichend hohen Temperaturen der Innenwand des Gasführungsabschnitts 12 (größer als in etwa 210°C) bildet sich in der Regel kein dauerhafter Film F. Es ist eher eine pulsierende Filmbildung zu erwarten, d.h. nach einem Injektorpuls wird die Innenwand des Abschnitts 12 benetzt, wobei sich der Film F ausbildet, der wiederum in Strömungsrichtung wandert. Dies wiederholt sich mit dem nächsten Injektorpuls.

Wie vorstehend bereits beschrieben wurde, führt die vergleichsweise schnelle Wanderung des Films F zu einer ungleichmäßigen Verteilung des Harnstoffs in dem Gasstrom G. Bei ungünstigen Temperaturbedingungen kann überdies die Bildung von Ablagerungen auftreten.

Erfindungsgemäß wurde erkannt, dass es vorteilhaft ist, den Film F länger in dem Heizabschnitt 16 zu halten. Zu diesem Zweck sind - wie anhand der Mischvorrichtung 10-1 in Fig. 2 gezeigt - mehrere Erhebungen 24 vorgesehen, die in radialer Richtung in die Gasströmung ragen. Die Innenwand des Gasführungsabschnitts 12 weist zumindest in dem Heizabschnitt 16 somit zumindest abschnittsweise keine glatte Oberfläche auf, wie es bei herkömmlichen Mischvorrichtungen der Fall ist (siehe Fig. 1). Die Mischvorrichtung 10-1 stellt dem Film F - bildlich gesprochen - durch die Erhebungen 24 einen Widerstand entgegen, den dieser bei seiner Wanderung zu überwinden hat. Die Erhebungen 24 können beispielsweise Sicken sein, die in den Gasführungsabschnitt 12 eingebracht sind. Ihre Anordnung und Anzahl kann gemäß dem jeweils vorliegenden Anforderungsprofil gewählt werden. Beispielsweise erstrecken sie sich vollständig in Umfangsrichtung des Abschnitts 12. Es ist jedoch auch möglich, sie nur abschnittsweise in Umfangsrichtung auszugestalten und beispielsweise in axialer Richtung versetzt angeordnete Erhebungsabschnitte vorzusehen. Eine asymmetrische Anordnung oder Ausbildung der Erhebungen 24 kann insbesondere bei asymmetrischen Ausgestaltungen des Gasführungsabschnitts 12 von Vorteil sein.

Fig. 2 zeigt anschaulich den Widerstand, der der Wanderung des Films F entgegenwirkt (siehe "Stick"-Effekt). Dieser muss die stromaufwärtigen Flanken 24a der Erhebungen "heraufwandern". Aber auch bei dem sogenannten "Rebound"-Effekt ergeben sich Vorteile aufgrund der Erhebungen 24. Prallen nämlich Tröpfchen 22 auf die stromaufwärtige Flanken 24a der Erhebungen 24, die in das Innere des Abschnitts 12 geneigt sind, so werden diese - verglichen mit einer glatten Oberfläche - weniger stark in Strömungsrichtung abgelenkt. Durch diesen geometrischen Effekt wird eine bessere Verteilung des zugesetzten Harnstoffs im zentralen Bereich des Gasführungsabschnitt bewirkt, wodurch der positive Effekt einer verbesserten Verdampfung aufgrund einer langsameren Wanderung des Films F unterstützt wird.

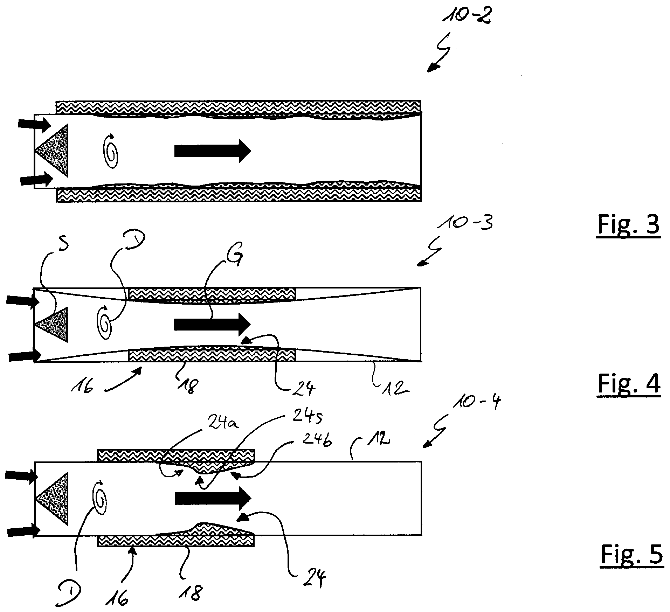

Die Fig. 3 zeigt eine Mischvorrichtung 10-2, die im Wesentlichen der Mischvorrichtung 10-1 entspricht. Darunter sind in den Fig. 4 und 5 alternative Mischvorrichtungen 10-3 und 10-4 gezeigt. Diese Darstellung erleichtert den Vergleich der unterschiedlichen Ausführungsformen.

Bei der Ausführungsform 10-3 gemäß Fig. 4 ist ein schmalerer Sprühkegel S vorgesehen. Ferner ist eine einzige Erhebung 24 vorgesehen, die im Wesentlichen symmetrisch ausgestaltet ist und im Wesentlichen die ganze Innenwand des Gasführungsabschnitts 12 bildet. In dem Scheitelpunkt der Erhebung 24 und in angrenzenden Bereichen ist die Heizeinrichtung 18 angeordnet. Der Heizabschnitt 16 umfasst somit einen im Wesentlichen zentralen Bereich des Gasführungsabschnitts 12.

Die Erhebung 24 bildet eine düsenartige Verengung. Der stromaufwärtige Abschnitt der Verengung wird bei Betrieb des Injektors, der der Einfachheit halber in den Fig. 2 bis 9 nicht gezeigt ist, von Harnstoff benetzt. Der erzeugte Film F wandert dann in die Verengung hinein und gelangt in den Heizabschnitt 16, wo er sehr effizient verdampft wird. Durch die von der Erhebung 24 erzeugte Verengung wird der Gasstrom G beschleunigt, was ebenfalls zu einer verbesserten Durchmischung beitragen kann, insbesondere da in dem Gasstrom G eine Drallkomponente D vorhanden ist.

Dies ist auch bei der Mischvorrichtung 10-4 der Fall. Die Erhebung 24 ist hier in einem stromabwärtigen Endbereich des Heizabschnitts 16 angeordnet. Sie ist im vorliegenden Beispiel rotationssymmetrisch ausgebildet. Ein stromaufwärtiger Abschnitt der stromaufwärtigen Flanke 24a der Erhebung 24 ist vergleichsweise flach geneigt. Er geht in einen steileren Abschnitt über. In ihrem Scheitelpunkt geht die stromaufwärtige Flanke 24a der Erhebung 24 über einen gekrümmten Abschnitt 24s (Scheitelabschnitt) in eine im Wesentlichen ebene Schräge über, die etwas flacher ausgestaltet ist als der steilere der beiden Abschnitte der stromaufwärtigen Flanke 24a der Erhebung 24. Die ebene Schräge bildet ein stromawärtige Flanke 24b der Erhebung 24. Der gekrümmte Scheitelabschnitt 24s zwischen der stromaufwärtigen Flanke 24a und der stromabwärtigen Flanke 24b verhindert ein Abrei-ßen der Strömung, was sich positiv auf den von der Mischvorrichtung 10-4 erzeugten Gegendruck auswirkt.

Es versteht sich, dass die Geometrie der Erhebungen bedarfsgerecht gewählt werden kann. Es ist durchaus möglich, Einzelaspekte der vorstehend beschriebenen Geometrien miteinander zu kombinieren. Auch die Position und/oder Anzahl der Erhebung kann bedarfsgerecht angepasst werden.

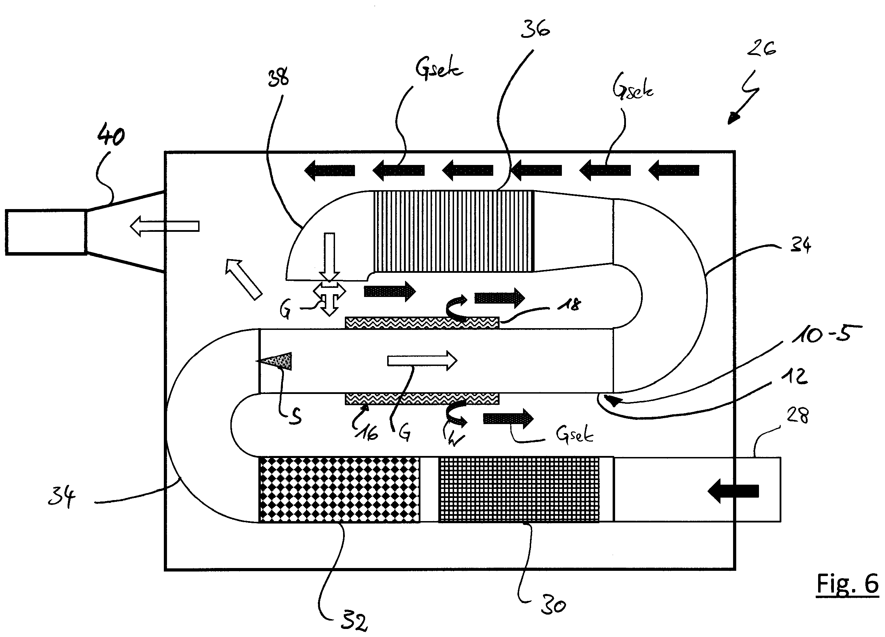

Fig. 6 zeigt eine Kammer 26 einer Abgasanlage, die beispielsweise auch als Akustikkammer fungieren kann. Die Kammer 26 umfasst einen Gaseinlassabschnitt 28, der strömungstechnisch mit einer Oxidationskatalysatoreinheit 30 (z.B. DOC-Katalysator) verbunden ist. Aus der Katalysatoreinheit 30 ausströmendes Abgas wird anschließend einem Partikelfilter 32 zugeführt. Anschließend strömt das Abgas durch einen Umlenkabschnitt 34 dem Gasführungsabschnitt 12 einer Mischvorrichtung 10-5 zu. Dieser umfasst einen nicht gezeigten Injektor zur Erzeugung eines Sprühkegels S und einen Heizabschnitt 16. In diesem Bereich ist ferner zumindest eine Erhebung vorgesehen, die in den Gasstrom G ragt. Aus Gründen der Übersichtlichkeit ist diese jedoch in Fig. 6 nicht gezeigt. Die Mischvorrichtung 10-5 kann beispielsweise gemäß einer der vorstehend beschriebenen Ausführungsformen ausgestaltet sein.

Nach dem Austritt aus der Mischvorrichtung 10-5 strömt das Abgas über einen weiteren Umlenkabschnitt 34 einer SCR-Katalysatoreinheit 36 zu. Aus dieser austretendes Abgas gelangt anschließend in das Innere der Kammer 26. Ein entsprechender Gasauslass 38 ist derart angeordnet und ausgebildet, dass die Mischvorrichtung 10-5 zumindest abschnittsweise von Abgas direkt angeströmt wird. Dadurch wird deren Aufheizung unterstützt, was insbesondere bei einem Kaltstart der Brennkraftmaschine von Vorteil ist.

Das aus dem Auslass 38 austretende Abgas G strömt nicht vollständig auf direktem Wege einem Gasauslassabschnitt 40 der Kammer 26 zu, der mit weiteren Komponenten der Abgasanlage verbunden ist. Ein Teil dieses Abgases verteilt sich in der Kammer 26 und bildet einen Sekundärstrom Gsek, der auch die Katalysatoren 30, 32, 36 von außen mit Wärme beaufschlagt, so dass sie ihren Betriebspunkt schneller erreichen.

Ein weiterer Vorteil der anhand der Fig. 6 beschriebenen Anordnung ist, dass nach radial außen abgegebene Wärme W der Heizeinrichtung 18 der Mischvorrichtung 10-5 nicht ungenutzt im Außenraum "verpufft". Diese Wärme trägt zur Erwärmung des Gasstroms G in der Kammer 26 bei, wodurch ein schnelles Erreichen der Betriebstemperatur aller Komponenten erreicht wird.

Die Kammer 26 kann auch als Akustikkammer dienen und Komponenten zur gezielten Beeinflussung der Schallemissionen, insbesondere zu deren Dämpfung, umfassen.

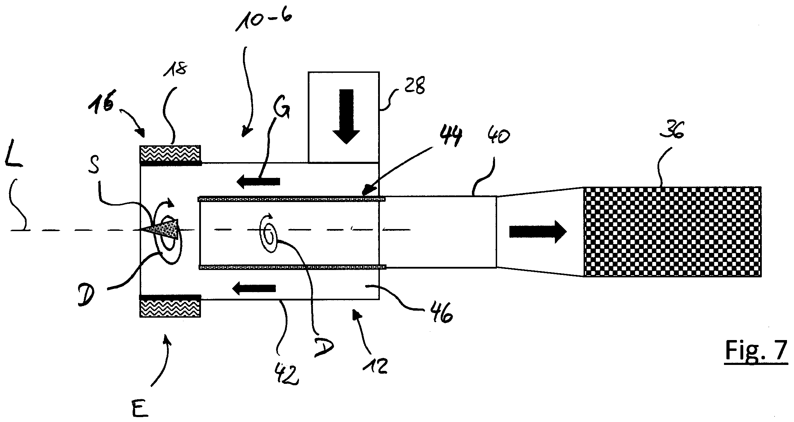

Fig. 7 zeigt eine Mischvorrichtung 10-6, dem durch den Gaseinlassabschnitt 28 Abgas zugeführt wird. Der Abgaseinlassabschnitt 28 ist in etwa senkrecht zu einer Längsachse L der Mischvorrichtung 10-6 angeordnet. Der Einlassabschnitt 28 ist zudem derart angeordnet, dass das Abgas seitlich versetzt zu der Längsachse der Vorrichtung 10-5 einströmt.

Der Gasführungsabschnitt 12 der Vorrichtung 10-6 umfasst eine Mischkammer 42, in die ein Tauchrohr 44 ragt. Zwischen der Innenwandung der Mischkammer 42 und dem Tauchrohr 44 ist ein radialer Spalt 46 vorgesehen, in den das Abgas eingebracht wird. Durch den seitlichen Versatz des Einbringens weist der Gasstrom G in dem Spalt 46 nicht nur eine axiale Komponente, sondern auch eine Drallkomponente auf. Mit anderen Worten umströmt das Abgas das Tauchrohr 44 außenseitig spiralförmig, bevor es in einen Eindosierbereich E gelangt, der an einem dem Gaseinlassabschnitt 28 gegenüberliegenden Endbereich der Mischkammer angeordnet ist. Der drallbeaufschlagte Gasstrom G wird hier mittels eines nicht dargestellten Injektors mit einem Sprühkegel S beaufschlagt. Da in dem Eindosierbereich E die Heizeinrichtung angeordnet ist, fallen der Heizabschnitt 16 und der Eindosierbereich E im Wesentlichen zusammen.

Um die Verdampfung des zugesetzten Harnstoffs zu verbessern, sind in dem Heizabschnitt 16 in Umfangsrichtung verteilt angeordnete Erhebungen mit einer axialen Erstreckung vorgesehen (nicht gezeigt). Das drallbeaufschlagte Abgas muss daher über diese Erhebungen strömen. Dabei treten im Wesentlichen die gleichen Effekte auf, wie sie eingangs anhand der Fig. 2 beschrieben wurden.

Da permanent Abgas von dem Einlassabschnitt 28 zugeführt wird, wird das mit Harnstoff beaufschlagte Abgas, das weiterhin eine Drallkomponente D aufweist, in das Tauchrohr 44 gedrängt, bevor es die Mischvorrichtung 10-6 über den Gasauslassabschnitt 40 verlässt. Anschließend wird es der SCR-Katalysatoreinheit 36 zugeführt.

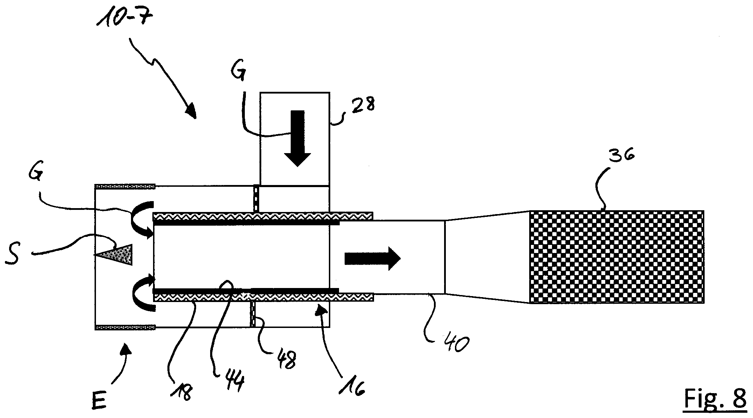

Anhand Fig. 8 wird eine weitere Mischvorrichtung 10-7 erläutert. Auch hier kann der Gaseinlassabschnitt 28 als sogenannter Schneckeneinlass ausgestaltet sein, wodurch der Gasstrom G zunächst drallbeaufschlagt ist. Durch ein Lochblech 48 oder ein funktionell ähnliches Strömungsleitelement wird der Gasstrom G nun gleichgerichtet, so dass er im Wesentlichen nur eine axiale Strömungskomponente aufweist. In dem Eindosierbereich E, der in vorliegenden Ausführungsbeispiel nicht aktiv beheizt wird, erfolgt die Beaufschlagung des Gasstroms G mit der Harnstofflösung. Dabei findet eine Strömungsumlenkung statt, durch die das Abgas in der entgegengesetzten Richtung durch das Tauchrohr 44 aus der Vorrichtung 10-7 und zu der SCR-Katalysatoreinheit 36 strömt. Das Tauchrohr 44 ist mit einer Heizeinrichtung 18 versehen. Der Heizabschnitt 16 der Vorrichtung 10-7 ist somit an dem Tauchrohr 44 ausgebildet. Im Bereich des Heizabschnitts 16 ist auch zumindest eine Erhebung vorgesehen, die sich vorzugsweise in Umfangsrichtung des Tauchrohrs 44 erstreckt.

Grundsätzlich ist es auch möglich, in dem Eindosierbereich E der Mischvorrichtung 10-7 eine weitere Heizeinrichtung anzuordnen, um für eine noch bessere Verdampfung der Harnstofflösung zu sorgen. Dann können bei Bedarf in diesem Bereich auch die anhand der Fig. 7 beschriebenen axialen Erhebungen vorgesehen sein.

Dies soll deutlich machen, dass eine aktive Beheizung an den unterschiedlichsten Stellen der jeweiligen Mischvorrichtung vorgesehen sein kann. Wesentlich ist erfindungsgemäß lediglich, dass in zumindest einem Heizabschnitt auch zumindest eine in den Gasstrom ragende Erhebung vorgesehen ist, um den eingangs beschriebenen synergetischen Effekt zu erzielen. Letztlich hängt es aber vom jeweiligen Anwendungsfall ab, wie die Erhebung konkret ausgestaltet und angeordnet ist bzw. ob mehrere Erhebungen gleicher oder unterschiedlicher Art vorgesehen sind.

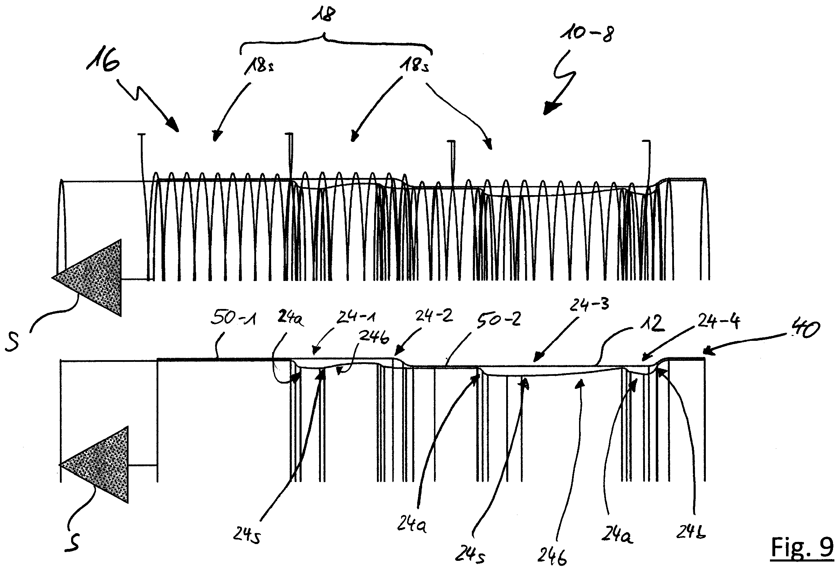

Fig. 9 zeigt eine weitere Mischvorrichtung 10-8 in einer Schnittansicht. In der oberen Hälfte der Figur ist die Heizeinrichtung 18 angedeutet, die drei Heizspulen 18s umfasst. Zusammen definieren Sie den aktiv beheizten Heizabschnitt 16.

Im unteren Teil der Fig. 9 wurde auf die Darstellung der Heizeinrichtung 18 verzichtet, um die Ausgestaltung des Gasführungsabschnitts 12 im Bereich des Heizabschnitts 16 besser erkennen zu können. Stromabwärts des Sprühkegels S weist der Gasführungsabschnitt 12 zunächst einen ersten erhebungsfreien Abschnitt 50-1 auf. Daran schließt sich eine erste Erhebung mit einer strömungsaufwärtigen Flanke 24a an, die einen ersten, vergleichsweise steilen und einen zweiten flacher geneigten Abschnitt aufweist. Die stromabwärtige Flanke 24b der Erhebung 24-1 ist ebenfalls vergleichsweise schwach geneigt. Es folgt eine zweite Erhebung 24-2, die letztlich zu einer echten Querschnittsverengung führt. Ein zweiter erhebungsfreier Abschnitt 50-2 im Anschluss an die zweite Erhebung 24-2 weist nämlich einen kleineren Durchmesser auf als der erhebungsfreie Abschnitt 50-1. Stromabwärts des erhebungsfreien Abschnitts 50-2 ist eine weitere Erhebung 24-3 angeordnet, die wiederum eine vergleichsweise steile stromaufwärtige Flanke 24a und eine vergleichsweise flache stromabwärtige Flanke 24b aufweist. Der Übergang 24s zwischen den beiden Flanken 24a, 24b ist langgestreckt und gekrümmt, um einerseits die Wanderung des Harnstofffilms zu hemmen und andererseits eine gute Verdampfung des Harnstoffs bei gleichzeitig optimierter Strömungsdynamik zu erreichen.

An die Erhebung 24-3 schließt sich unmittelbar eine weitere Erhebung 24-4 an, die einen vergleichsweise steilen und einen in axialer Richtung etwas längeren aber flacheren Abschnitt an ihrer stromaufwärtigen Flanke 24a aufweist. Die stromabwärtige Flanke 24b ist vergleichsweise steil und geht in einen aufgeweiteten Auslassabschnitt 40 über, in den beispielsweise ein rohrförmiger Anschlussabschnitt der Abgasanlage einsetzbar ist.

Im Gegensatz zu Ausführungsformen, bei denen die Erhebungen durch abschnittsweises Umformen eines Blechteils erzeugt wird, sind die Erhebungen im Fall der Vorrichtung 10-8 durch eine Variation der Dicke des Materials der Wandung des Gasführungsabschnitts 12 gebildet. Dickere Abschnitte sind thermisch träger und speichern mehr thermische Energie, so dass hier eine besonders gute Verdampfung des eingebrachten Zusatzstoffs erfolgt. Es versteht sich, dass durch Umformen erzeugte Sicken und Erhebungen aus einem Vollmaterial kombiniert werden können.

### Bezugszeichenliste

- 10, 10-1 - 10-8: Mischvorrichtung
- 12: Gasführungsabschnitt
- 14: Injektor
- 16: Heizabschnitt
- 18: Heizeinrichtung
- 18s: Heizspule
- 20: Harnstoffprofil
- 22: Tröpfchen
- 24, 24-1 - 24-4: Erhebung
- 24a: stromaufwärtige Flanke
- 24s: Scheitelabschnitt
- 24b: stromabwärtige Flanke
- 26: Kammer
- 28: Gaseinlassabschnitt
- 30: Oxidationskatalysatoreinheit
- 32: Partikelfilter
- 34: Umlenkabschnitt
- 36: SCR-Katalysatoreinheit
- 38: Gasauslass
- 40: Gasauslassabschnitt
- 42: Mischkammer
- 44: Tauchrohr
- 46: radialer Spalt
- 48: Lochblech
- 50-1, 50-2: erhebungsfreier Abschnitt
- G: Abgasstrom
- L: Längsachse
- Gsek: Sekundärstrom
- S: Sprühkegel
- D: Drallkomponente/Wirbel
- F: Film
- E: Eindosierbereich
- W: Wärmestrom

## Patentansprüche

1. Mischvorrichtung zum Einbringen und Verteilen eines flüssigen Zusatzstoffes in einen Gasstrom (G), insbesondere für eine Abgasanlage einer Brennkraftmaschine, umfassend
einen Gasführungsabschnitt (12) zur Führung des Gasstroms,
eine Eindosiereinrichtung (14) zum Einbringen des Zusatzstoffes in einen Eindosierbereich des Gasführungsabschnitts (12),
eine Heizeinrichtung (18) zur aktiven Beheizung zumindest eines Heizabschnitts (16) des Gasführungsabschnitts (12),
wobei der Heizabschnitt (16) in dem Eindosierbereich und/oder stromabwärts des Eindosierbereichs angeordnet ist und der Gasführungsabschnitt (12) in dem Heizabschnitt (16) zumindest eine radial in den Gasstrom ragende Erhebung (24, 24-1 bis 24-4) zur Beeinflussung der Strömung des Gasstroms aufweist, die sich in Umfangsrichtung des Gasführungsabschnitts (12) erstreckt,
**dadurch gekennzeichnet,**
**dass** die Erhebung (24) durch einen Umformprozess des Gasführungsabschnitts (12) erzeugt ist, insbesondere wobei die Erhebung (24) eine Sicke ist,
oder dass die Erhebung (24, 24-1 bis 24-4) durch eine lokale Verdickung einer Wandung des Gasführungsabschnitts (12) gebildet ist,
**dass** zumindest zwei Erhebungen vorgesehen sind, die in Strömungsrichtung des Gasstroms (G) gesehen hintereinander angeordnet sind.

2. Mischvorrichtung nach Anspruch 1,
wobei sich die Erhebung (24, 24-1 bis 24-4) in einer axialen Richtung des Gasführungsabschnitts (12) erstreckt, insbesondere wobei zumindest zwei Erhebungen (24, 24-1 bis 24-4) vorgesehen sind, die in Umfangsrichtung des Heizabschnitts (16) verteilt angeordnet sind.

3. Mischvorrichtung nach Anspruch 1 oder 2,
wobei eine stromaufwärtige Flanke (24a) der Erhebung (24, 24-1 bis 24-4) und/oder eine stromabwärtige Flanke (24b) der Erhebung (24, 24-1, 24-3, 24-4) in Strömungsrichtung des Gases (G) zumindest abschnittsweise eben ausgebildet ist.

4. Mischvorrichtung nach einem der vorstehenden Ansprüche,
wobei eine stromaufwärtige Flanke (24a) der Erhebung (24, 24-1 bis 24-4) und/oder eine stromabwärtige Flanke (24b) der Erhebung (24, 24-1, 24-3, 24-4) in Strömungsrichtung des Gases (G) zumindest abschnittsweise gekrümmt ist.

5. Mischvorrichtung nach einem der vorstehenden Ansprüche,
wobei eine stromaufwärtige Flanke (24a) der Erhebung (24, 24-1 bis 24-4) zumindest abschnittsweise steiler ist als eine stromabwärtige Flanke (24b) der Erhebung (24, 24-1, 24-3, 24-4).

6. Mischvorrichtung nach einem der vorstehenden Ansprüche,
wobei eine stromaufwärtige Flanke (24a) der Erhebung (24, 24-1 bis 24-4) und eine stromabwärtige Flanke (24b) der Erhebung (24, 24-1, 24-3, 24-4) über einen gekrümmten Abschnitt (24s) ineinander übergehen.

7. Mischvorrichtung nach einem der vorstehenden Ansprüche,
wobei der Gasführungsabschnitt (12) im Heizabschnitt (16) zumindest einen ersten und einen zweiten erhebungsfreien Abschnitt (50-1, 50-2) aufweist, zwischen denen die Erhebung (24-1) angeordnet ist, insbesondere wobei der zweite erhebungsfreie Abschnitt (50-2) eine kleinere Querschnittsfläche aufweist als der erste erhebungsfreie Abschnitt (50-1).

8. Mischvorrichtung nach einem der vorstehenden Ansprüche,
wobei stromaufwärts und/oder stromabwärts der Eindosiereinrichtung (14) zumindest ein statischer Mischer angeordnet ist, um den Gasstrom (G) mit einer Drallkomponente (D) zu beaufschlagen.

9. Mischvorrichtung nach einem der vorstehenden Ansprüche,
wobei der Gasführungsabschnitt (12) eine Mischkammer (42) mit einem ersten Endbereich, der einen Gaseinlass (28) des Gasführungsabschnitts aufweist, und mit einem dem ersten Endbereich gegenüber liegenden zweiten Endbereich, der den Eindosierbereich (E) umfasst, aufweist, und wobei der Gasführungsabschnitt ferner ein Tauchrohr (44) umfasst, das einen Gasauslass (40) des Gasführungsabschnitts (12) bildet und das von dem ersten Endbereich in die Mischkammer (42) ragt, insbesondere wobei eine Längsachse der Mischkammer und eine Längsachse des Tauchrohrs parallel, bevorzugt koaxial angeordnet sind.

10. Mischvorrichtung nach Anspruch 9,
wobei die Heizeinrichtung (18) an dem Tauchrohr (44) angeordnet ist und/oder wobei die Heizeinrichtung (18) in dem zweiten Endbereich angeordnet ist.

11. Mischvorrichtung nach Anspruch 9 oder 10,
wobei der Gaseinlass (28) derart ausgestaltet und angeordnet ist, dass der Gasstrom (G) in einer Richtung quer, insbesondere senkrecht und seitlich versetzt zu einer Längsachse der Mischkammer in die Mischkammer (42) einbringbar ist und/oder wobei zwischen der Mischkammer (42) und dem Tauchrohr (44) ein radialer Spalt (46) vorgesehen ist, durch den Gas aus dem ersten Endbereich zu dem zweiten Endbereich strömt, insbesondere wobei in dem Spalt (46) eine Strömungsleiteinrichtung (48) angeordnet ist.

12. Abgasreinigungseinrichtung zur Reinigung eines Abgases einer Brennkraftmaschine mit einer Mischvorrichtung nach einem der vorstehenden Ansprüche, wobei die Mischvorrichtung stromabwärts zumindest einer SCR-Katalysatoreinheit (36) angeordnet ist, insbesondere wobei stromaufwärts der Mischvorrichtung zusätzlich zumindest eine Partikelfiltereinheit (32) und/oder eine Oxidationskatalysatoreinheit (30) angeordnet ist und/oder wobei die Mischvorrichtung in einer Kammer (26) angeordnet ist, die mit der SCR-Katalysatoreinheit (36) in Verbindung steht, so dass die Mischvorrichtung zumindest abschnittsweise mit zumindest einem Teil des aus der SCR-Katalysatoreinheit (36) austretenden Abgasstroms beaufschlagbar ist, insbesondere wobei die SCR-Katalysatoreinheit (36) in der Kammer (26) angeordnet ist.

## Claims

1. A mixing apparatus for introducing and distributing a liquid additive into a gas flow (G), in particular for an exhaust gas system of an internal combustion engine, said mixing apparatus comprising
a gas-guiding section (12) for guiding the gas flow;
a metering-in device (14) for introducing the additive into a metering-in region of the gas-guiding section (12); and
a heating device (18) for actively heating at least one heating section (16) of the gas-guiding section (12),
wherein the heating section (16) is arranged in the metering-in region and/or downstream of the metering-in region and the gas-guiding section (12) has, in the heating section (16), at least one elevated portion (24, 24-1 to 24-4) projecting radially into the gas flow for influencing the flow of the gas flow and extending in the peripheral direction of the gas-guiding section (12),
**characterized in that**
the elevated portion (24) is produced by a reshaping process of the gas-guiding section (12), in particular with the elevated portion (24) being a bead,
or **in that** the elevated portion (24, 24-1 to 24-4) is formed by a local thickening of a wall of the gas-guiding section (12),
**in that** at least two elevated portions are provided which are arranged behind one another, viewed in a direction of flow of the gas flow (G).

2. A mixing apparatus according to claim 1,
wherein the elevated portion (24, 24-1 to 24-4) extends in an axial direction of the gas-guiding section (12), in particular wherein at least two elevated portions (24, 24-1 to 24-4) are provided which are arranged distributed in the peripheral direction of the heating section (16).

3. A mixing apparatus according to claim 1 or 2,
wherein an upstream flank (24a) of the elevated portion (24, 24-1 to 24-4) and/or a downstream flank (24b) of the elevated portion (24, 24-1, 24-3, 24-4) is/are formed at least sectionally planar in the direction of flow of the gas (G).

4. A mixing apparatus according to any one of the preceding claims,
wherein an upstream flank (24a) of the elevated portion (24, 24-1 to 24-4) and/or a downstream flank (24b) of the elevated portion (24, 24-1, 24-3, 24-4) is/are at least sectionally curved in the direction of flow of the gas (G).

5. A mixing apparatus according to any one of the preceding claims,
wherein an upstream flank (24a) of the elevated portion (24, 24-1 to 24-4) is at least sectionally steeper than a downstream flank (24b) of the elevated portion (24, 24-1, 24-3, 24-4).

6. A mixing apparatus according to any one of the preceding claims,
wherein an upstream flank (24a) of the elevated portion (24, 24-1 to 24-4) and a downstream flank (24b) of the elevated portion (24, 24-1, 24-3, 24-4) merge into one another via a curved section (24s).

7. A mixing apparatus according to any one of the preceding claims,
wherein the gas-guiding section (12) has, in the heating section (16), at least a first and a second elevated portion-free section (50-1, 50-2) between which the elevated portion (24-1) is arranged, in particular wherein the second elevated portion-free section (50-2) has a smaller cross-sectional surface than the first elevated portion-free section (50-1).

8. A mixing apparatus according to any one of the preceding claims,
wherein at least one static mixer is arranged upstream and/or downstream of the metering-in device (14) to apply a swirl component (D) to the gas flow (G).

9. A mixing apparatus according to any one of the preceding claims,
wherein the gas-guiding section (12) has a mixing chamber (42) having a first end region, which has a gas inlet (28) of the gas-guiding section, and having a second end region which is disposed opposite the first end region and which comprises the metering-in region (E), and wherein the gas-guiding section further comprises a dip tube (44) which forms a gas outlet (40) of the gas-guiding section (12) and which projects from the first end region into the mixing chamber (42), in particular wherein a longitudinal axis of the mixing chamber and a longitudinal axis of the dip tube are arranged in parallel, preferably coaxially.

10. A mixing apparatus according to claim 9,
wherein the heating device (18) is arranged at the dip tube (44) and/or wherein the heating device (18) is arranged in the second end region.

11. A mixing apparatus according to claim 9 or 10,
wherein the gas inlet (28) is designed and arranged such that the gas flow (G) can be introduced into the mixing chamber (42) in a direction transverse to, in particular perpendicular to and laterally offset from a longitudinal axis of the mixing chamber, and/or wherein a radial gap (46) is provided between the mixing chamber (42) and the dip tube (44), through which radial gap (46) gas flows from the first end region to the second end region, in particular wherein a flow-conducting device (48) is arranged in the gap (46).

12. An exhaust gas purification device for purifying an exhaust gas of an internal combustion engine comprising a mixing apparatus according to any one of the preceding claims, wherein the mixing apparatus is arranged downstream of at least one SCR catalyst unit (36), in particular wherein at least one particulate filter unit (32) and/or one oxidation catalyst unit (30) is/are additionally arranged upstream of the mixing apparatus, and/or wherein the mixing apparatus is arranged in a chamber (26) which is in connection with the SCR catalyst unit (36) so that the mixing apparatus can at least sectionally be acted on by at least a portion of the exhaust gas flow exiting from the SCR catalyst unit (36), in particular wherein the SCR catalyst unit (36) is arranged in the chamber (26).

## Revendications

1. Dispositif de mélange destiné à introduire et à distribuer un additif liquide dans un flux gazeux (G), en particulier pour une installation de gaz d'échappement d'une machine à combustion interne, comprenant
une section de guidage de gaz (12) destinée à guider le flux gazeux,
un système d'addition dosée (14) destinée à introduire l'additif dans une zone d'addition dosée de la section de guidage de gaz (12),
un système de chauffage (18) destiné à chauffer activement au moins une section de chauffage (16) de la section de guidage de gaz (12),
dans lequel la section de chauffage (16) est agencée dans la zone d'addition dosée et/ou en aval de la zone d'addition dosée et la section de guidage de gaz (12) présente, dans la zone de chauffage (16), au moins une protubérance (24, 24-1 à 24-4) en projection radiale dans le flux gazeux destinée à influencer l'écoulement du flux gazeux qui s'étend dans une direction circonférentielle de la section de guidage de gaz (12),
**caractérisé en ce que**
la protubérance (24) est générée par un processus de déformation de la section de guidage de gaz (12), en particulier dans laquelle la protubérance (24) est une moulure,
ou **en ce que** la protubérance (24, 24-1 à 24-4) est formée par un épaississement local d'une paroi de la section de guidage de gaz (12),
**en ce qu'**il est prévu au moins deux protubérances qui sont agencées les unes derrière les autres, vues dans une direction d'écoulement du flux gazeux (G).

2. Dispositif de mélange selon la revendication 1,
dans lequel la protubérance (24, 24-1 à 24-4) s'étend dans une direction axiale de la section de guidage de gaz (12), en particulier dans lequel il est prévu au moins deux protubérances (24, 24-1 à 24-4) qui sont agencées en se répartissant dans la direction circonférentielle de la section de chauffage (16).

3. Dispositif de mélange selon la revendication 1 ou 2,
dans lequel un flanc amont (24a) de la protubérance (24, 24-1 à 24-4) et/ou un flanc aval (24b) de la protubérance (24, 24-1, 24-3, 24-4) sont réalisés au moins en partie de manière plane dans la direction d'écoulement du gaz (G).

4. Dispositif de mélange selon l'une quelconque des revendications précédentes,
dans lequel un flanc amont (24a) de la protubérance (24, 24-1 à 24-4) et/ou un flanc aval (24b) de la protubérance (24, 24-1, 24-3, 24-4) sont réalisés au moins en partie de manière incurvée dans la direction d'écoulement du gaz (G).

5. Dispositif de mélange selon l'une quelconque des revendications précédentes,
dans lequel un flanc amont (24a) de la protubérance (24, 24-1 à 24-4) est au moins en partie plus incliné qu'un flanc aval (24b) de la protubérance (24,24-1, 24-3, 24-4).

6. Dispositif de mélange selon l'une quelconque des revendications précédentes,
dans lequel un flanc amont (24a) de la protubérance (24, 24-1 à 24-4) et un flanc aval (24b) de la protubérance (24, 24-1, 24-3, 24-4) se rejoignent via une section incurvée (24s).

7. Dispositif de mélange selon l'une quelconque des revendications précédentes,
dans lequel la section de guidage de gaz (12) présente, dans la zone de chauffage (16), au moins une première et une seconde zone exemptes de protubérance (50-1, 50-2) entre lesquelles la protubérance (24-1) est agencé, en particulier dans lequel la seconde section exempte de protubérance (50-2) présente une surface de section transversale plus petite que la première section exempte de protubérance (50-1).

8. Dispositif de mélange selon l'une quelconque des revendications précédentes,
dans lequel, en amont et/ou en aval du système d'addition dosée (14), au moins un mélangeur statique est agencé pour appliquer une composante de tourbillon (D) au flux gazeux (G).

9. Dispositif de mélange selon l'une quelconque des revendications précédentes,
dans lequel la section de guidage de gaz (12) présente une chambre de mélange (42) avec une première zone d'extrémité qui présente une entrée de gaz (28) de la section de guidage de gaz, et avec une seconde zone d'extrémité située à l'opposé de la première zone d'extrémité qui comprend la zone d'addition dosée (E), et dans lequel la section de guidage de gaz comprend en outre un tube plongeur (44) qui forme une sortie de gaz (40) de la section de guidage de gaz (12) et qui est en projection depuis la première zone d'extrémité dans la chambre de mélange (42), en particulier dans lequel un axe longitudinal de la chambre de mélange et un axe longitudinal du tube plongeur sont agencés en parallèle, de préférence de manière coaxiale.

10. Dispositif de mélange selon la revendication 9,
dans lequel le système de chauffage (18) est agencé au niveau du tube plongeur (44) et/ou dans lequel le système de chauffage (18) est agencé dans la seconde zone d'extrémité.

11. Dispositif de mélange selon la revendication 9 ou 10,
dans lequel l'entrée de gaz (38) est conformée et agencée de telle sorte que le flux gazeux (G) peut être amené dans la chambre de mélange (42) dans une direction transversale, en particulier perpendiculaire et latéralement décalée, par rapport à un axe longitudinal de la chambre de mélange (42) et/ou dans lequel il est prévu, entre la chambre de mélange (42) et le tube plongeur (44), une fente radiale (46) à travers laquelle du gaz s'écoule depuis la première zone d'extrémité jusqu'à la seconde extrémité, en particulier dans lequel un système de conduite d'écoulement (48) est agencé dans la fente (46).

12. Système de purification de gaz d'échappement destiné à purifier un gaz d'échappement d'une machine à combustion interne comprenant un dispositif de mélange selon l'une quelconque des revendications précédentes, dans lequel le dispositif de mélange est agencé en amont au moins d'une unité de catalyseur à réduction catalytique sélective (SCR) (36), en particulier dans lequel, en amont du dispositif de mélange, au moins une unité de filtre à particules (32) et/ou une unité de catalyseur d'oxydation (30) sont agencées en outre et/ou dans lequel le dispositif de mélange est agencé dans une chambre (26) qui est en communication avec l'unité de catalyseur SCR (36) de telle sorte que le dispositif de mélange peut être sollicité au moins en partie par au moins une portion de l'écoulement de gaz d'échappement sortant hors de l'unité de catalyseur SCR (36), en particulier dans lequel l'unité de catalyseur SCR (36) est agencée dans la chambre (26).
